# EUROPEAN PATENT SPECIFICATION

(11) **EP 1 386 944 B1**
(45) Date of publication and mention of the grant of the patent: **06.09.2006**
(21) Application number: 02425754.5
(22) Date of filing: 06.12.2002
(51) Int. Cl.: C08L 53/02, A63C 19/04, E01C 13/08

(54) **Compaction material for synthetic lawn, process for its production and use**
Verdichtungsmaterial für künstliches Gras, Herstellungsverfahren und Verwendung
Material de compactage pour gazon artificiel, sa production et son utilisation

(30) Priority: 02.08.2002 IT MI20021749
(43) Date of publication of application: 04.02.2004
(73) Proprietor: Franplast S.R.L., 25050 Provaglio D'Iseo (Brescia) (IT)
(72) Inventor: Pasinetti, Riccardo, Lovere (Bergamo) (IT)
(74) Representative: Modiano, Micaela Nadia

(56) References cited:
- EP-A- 0 174 755
- EP-A- 0 845 498
- US-A- 4 735 825

## Description

The present invention relates to a compaction material for a synthetic lawn and to a process for preparing it. Furthermore, the present invention relates to the use of said material to give elasticity to an artificial or synthetic lawn.

Floorings for sports grounds consisting of synthetic lawns made of fibers, for instance polypropylene fibers connected onto a support, for instance by knotting, have been known for a long time.

The kind of flooring now described, made of fibers knotted or connected onto a support, can withdraw given amounts of silica sand. The sand used has a controlled granulometry that can spread uniformly among the fibers constituting the synthetic lawn and keep them in vertical position, so as to give the sports ground the aspect of a real "natural lawn". The aforesaid flooring for sports grounds made of a synthetic lawn and sand as compaction material, is an extremely stiff flooring, which can sometimes be dangerous for players performing sports activities. As a matter of fact, the high stiffness of the surface made of synthetic grass and sand cannot protect the joints of the players' legs and neither can it soften and reduce the damages which said players can get if they fall down during sports activities due to the low shock absorption of said lawn.

In order to overcome the drawbacks due to a high stiffness of the surface made of synthetic grass and sand particular grounds containing particular compaction materials have been developed.

It is known about the use of silica sand and granules of elastic material as compaction material for a lawn made of synthetic grass.

For instance, as elastic material natural or synthetic rubber in granular form, having a granulometry of about 0.05 to 2 mm, can be chosen.

It is known that a natural or synthetic rubber is a polymeric material with elastic properties that are typical of a thermosetting elastomeric material.

As a matter of fact, elastomer refers to a polymeric material with an elastic behavior, i.e. recovering strains due to an external stress and bringing the final shape of the manufactured item always back to the starting shape, even when the aforesaid strains are very high.

Such description helps to distinguish the aforesaid elastomeric materials from plastic materials or "plastomers".

It is known that a thermosetting (or vulcanized) elastomer, commonly referred to as "rubber", has particular properties allowing its use in several applications.

For instance, a thermosetting elastomer undergoes an irreversible chemical modification (vulcanization) during its transformation to obtain a manufactured item (for instance car tires).

A thermosetting elastomer is at first in a liquid/viscous state and, after being reticulated, cannot be worked a second time, for instance for a possible subsequent use, since it cannot be brought back to the viscous state.

A thermosetting elastomer to be re-used at the end of its lifetime must necessarily be ground, thus limiting its possible use. Alternatively, said material can be disposed of in a dump or in a burner. For such reasons a thermosetting elastomer cannot be regarded as a recyclable or "ecologic" material.

The use of a compaction material comprising sand mixed with granules of natural or synthetic rubber has some drawbacks.

A first drawback consists in that synthetic rubber, for instance block styrene-butadiene rubber (SBR), has a low skin compatibility and can give rise to cutaneous intolerance or allergies. Moreover, some vulcanized rubbers show a further drawback due to their black color. Such color limits the possibility of subsequently dyeing the compaction material with colors traditionally used for sports grounds such as green and white.

The possibility of dyeing with typical colors used in sports competitions is important in order to give the synthetic surface a higher naturalness and an appearance resembling more a real lawn for sports activities. Furthermore, a compaction material made of natural or synthetic rubber is used as crushed material. Said material is obtained by grinding, chopping, shaking or cutting semifinished products made of rubber or manufactured items made of recycled rubber meant at first for a different use, such as for instance truck tires. Said working steps result in a ground material having a non-uniform granulometry value together with a fraction made of powder.

Therefore, a grinding or chopping step allows to obtain also a fraction made of rubber powder which, if used as compaction material for a synthetic lawn, has the drawback of forming a powder ground.

Another drawback of a compaction material made of natural or synthetic rubber is due to the fact that said material cannot be recycled and is a potential source of environmental pollution at the end of its lifetime.

Finally, as everybody knows, compaction materials made of synthetic rubber stink above all if the ground is placed in a hot climate. Furthermore, compaction made with ground rubber obtained from recycled tires is a potential source of water pollution due to the release of heavy metals. Eventually, we can therefore state that today it is known about the use of a thermosetting compaction material (for instance natural or synthetic.rubber obtained by irreversible chemical reticulation, vulcanization) that has some drawbacks among which: negative anallergicity, dark color, evil smell (stinking) and non-recyclability at lifetime end.

EP-A-0845498 discloses a granulated material composed of a thermoplastic rubber, an extender oil, polyethylene and calcium carbonate filler.

EP-A-0174755 discloses an aritficial lawn compacted with sand and rubber granules.

Therefore, there is the need for a compaction material for a synthetic lawn that does not have the drawbacks of prior art.

In particular, there is the need for a compaction material for a synthetic lawn that has a reduced or absent toxicity, that is anallergic and recyclable. Moreover, there is the need for a compaction material for a synthetic lawn whose size is constant and uniform and that has a granulometry greater than 0.5 mm so as to ensure a suitable laying of the synthetic surface without powder.

Furthermore, there is the need for a compaction material for a synthetic lawn having a reduced skin abrasiveness, that is waterproof, ozone-resistant, stable to UV rays so as to ensure the sports ground a long lifetime.

Finally, it is important that the compaction material is "ecologic", i.e. it can be recyclable and environmentally friendly.

The present invention therefore aims at carrying out a compaction material for synthetic lawns that is anallergic, not toxic for players and for the environment and recyclable.

Another aim of the invention is to carry out a compaction material for synthetic lawns that can be dyed with colors used in sports grounds, that has a uniform granulometry and is easy to use.

A further aim is to carry out a compaction material for synthetic lawns that can-be laid in mixture with sand or alternatively with another material (other than sand) made of polyethylene or polypropylene obtained from recycling operations, or alternatively with sand and recycled material. A still further aim is to carry out a compaction material for synthetic lawns that can be laid alone, for instance by bedding onto a layer made of sand or alternatively onto a layer made of a polyethylene or polypropylene material obtained from recycling operations.

Still another aim is to carry out a compaction material for synthetic lawns with different granulometry values, which can be laid alone without using another material.

Another important aim is to carry out a compaction material for synthetic lawns whose density and elasticity degree can be varied according to needs without damaging the elasticity of its fiber and the laying of the synthetic lawn.

Finally, a further aim is to carry out a compaction material for synthetic lawns whose self-extinguishing degree and degree of smoke toxicity can be varied according to normative needs.

These and other aims that will be evident from the following detailed description are achieved by the Applicant who proposes a compaction material for synthetic lawn comprising an elastomer characterized in that said material comprises at least a thermoplastic elastomer.

A first object of the present invention is therefore a granular compaction material for synthetic lawn comprising at least a thermoplastic elastomer and a thermoplastic copolymer chosen from Ethylene - Vinylacetate copolymer (EJA) and/or Ethylene - Butylacetate copolymer (EBA). A further object of the present invention is a process for preparing a compaction material comprising at least a thermoplastic elastomer, and a thermoplastic copolymer chosen from EVA and/or EBA in which the components are mixed extruded and granulated.

The Applicant has found it useful to select among elastomeric polymeric materials thermoplastic materials.

Furthermore, elastomeric thermoplastic materials are molded at a given temperature in their viscous state and show their elastic properties simply thanks to cooling. Said materials, if necessary, can then be formed again by simply starting a new transformation cycle at a given temperature.

By way of summary we can say that thermosetting elastomers at the state of the art are obtained from an irreversible chemical reticulation and thermoplastic elastomers according to the present invention are obtained from a reversible physical reticulation (by cooling).

Advantageously, said thermoplastic elastomer are chosen among block styrene elastomers (SBC).

Preferably, said block styrene elastomers are hydrogenated.

Advantageously, said hydrogenated block styrene elastomers are chosen from the group:
- Styrene-Ethylene-Butylene-Styrene, (SEBS);
- Styrene-Ethylene-Propylene-Styrene, (SEPS);
- Styrene-Ethylene-Ethylene-Styrene, (SEEPS).

Moreover, the compaction material can comprise in addition a polymer chosen among polypropylene, polyethylene or other polyolefinic material.

Furthermore, said compaction material can comprise a diluting oil, lubricating and/or slipping additives, process additives, antioxidants, anti-UV filters.

Moreover, said compaction material can comprise an inert filler such as for instance calcium carbonate; preferably in an amount of 20 to 60% by weight with respect to the total weight of the compaction material.

A preferred embodiment of the present invention provide a method to give elasticity to a surface for sports activities comprising a synthetic lawn characterized by introducing among the fibers of the synthetic lawn optionally a filling material such as sand so as to form a layer and a layer of a granular compaction material comprising at least a thermoplastic elastomer and optionally another recycled polyethylene or polypropylene material.

For instance, a given amount of sand having a given granulometry can be arranged onto a surface made of synthetic fibers.

Then a given amount of thermoplastic elastomer according to the present invention in granular form can be arranged onto said layer of sand, so as to obtain a compact layer.

Preferably, the granules of the thermoplastic elastomer have a diameter of 0.5 to 2.5 mm.

The compaction material can comprise an elastomeric material having two different granulometry values.

The amount of thermoplastic elastomer used as compaction material varies according to the elastic properties to be given to the sports ground.

In practice, in an embodiment the Applicant has improved a method for giving elasticity to synthetic lawns comprising an inorganic material, such as for instance silica sand or quartz sand with controlled granulometry, which provides for a step consisting in introducing directly among the fibers constituting the synthetic grass of a lawn the thermoplastic elastomer in granular form.

In a second embodiment the Applicant has improved a method for giving elasticity to synthetic lawns, which provides for a step consisting in introducing directly among the fibers constituting the synthetic grass of a lawn only thermoplastic elastomer in granular form.

The amount of elastomer that is introduced is of 5 to 30 kg/square meter of ground.

The elastomeric material has the peculiar characteristics of an elastic material that justify its use for compacting synthetic lawns: deformability, recovery of strains, shock absorbing power, rebounding properties, draining properties and holding by surface friction.

Moreover, the elastomeric material has a high degree of elasticity and of shock absorbing power so as to be skin-friendly or anyway not irritating in case of skin contact - also violent - and anallergic.

A further object of the present invention is a process for preparing the elastomeric material.

A given amount of at least a thermoplastic elastomer is introduced into a container of a blade mixer; preferably in an amount of 5 to 30% by weight with respect to the total weight of the compaction material. Then a diluting oil can be added, for instance a paraffin oil; preferably in an amount of 10 to 30% by weight. Simultaneously, the mixing step can be started so as to enable the dilution of the elastomer with said oil.

Once the dilution is carried out, the other components are then added:
- a thermoplastic copolymer, for instance EVA, in an amount of 5 to 40% by weight;
- additives, such as process antioxidants, compatibility agent, lubricating agent and dispersing agent, other antioxidants and anti-UV filters.

The inorganic filler can further be added, such as calcium carbonate in an amount of 20 to 60% by weight. Said inorganic filler can be alternatively introduced laterally with respect to the extruder directly into the melted material after plasticization.

The mixture of the various components thus obtained is further homogenized in the blade mixer and then introduced into a compounding extruder. Within the extruder said mixture plasticizes and is ultimately homogenized to be divided into doses, extruded and granulated by means of cutting systems. The material obtained from the process described above is a preferred compaction material according to the present invention.

The compaction material according to the present invention, thanks to the process for its preparation, has a granule surface (surface quality) and an intrinsic sericeous quality (intrinsic characteristic of the material) that make it less abrasive with respect to a thermosetting vulcanized elastomer, and anyhow not slipping also in case the sports ground is wet or soaked. Furthermore, by suitably dosing the various components and additives it is possible to obtain a self-extinguishing compaction material.

The compaction material according to the present invention can be used to compact all types of sports grounds requiring surfaces with elastic properties.

### EXAMPLE OF COMPACTION MATERIAL

- Thermoplastic elastomer Styrene-Ethylene-Butylene-Styrene (SEBS) or (SEPS) 11% by weight, with respect to the total of the compaction material;
- Thermoplastic copolymer Ethylene-Vinyl Acetate (EVA) 10% by weight;
- Diluting paraffin oil 21% by weight;
- Calcium carbonate 52% by weight;
- Compatibility/Dispersing agent 0.5% by weight;
- Antioxidant 0.2% by weight;
- Lubricating agent (wax) 0.3 by weight; and
- Dye (green) 5% by weight.

## Claims

1. A granular compaction material for synthetic lawn comprising at least a thermoplastic elastomer **characterized in that** said material further comprises a thermoplastic copolymer chosen among:
- Ethylene-Vinyl Acetate (EVA); and/or
- Ethylene-Butyl Acetate (EBA).

2. The material according to claim 1, **characterized in that** said elastomer is chosen among block styrene elastomers.

3. The material according to claim 2, **characterized in that** said block styrene elastomers are not hydrogenated.

4. The material according to claim 2, **characterized in that** said block styrene elastomers are hydrogenated.

5. The material according to claim 4, **characterized in that** said elastomer is a block styrene elastomer chosen from the group:
- Styrene-Ethylene-Butylene-Styrene,(SEBS);
- Styrene-Ethylene-Propylene-Styrene,(SEPS);
- Styrene-Ethylene-Ethylene-Styrene,(SEEPS).

6. The material according to any of the preceding claims, **characterized in that** the material contains said at least a thermoplastic elastomer in an amount comprised from 5 to 30 % by weight with respect to the total weight of the granular compaction material.

7. The material according to any of the preceding claims, **characterized in that** the material contains said thermoplastic copolymer in an amount comprised from 5 to 40% by weight with respect to the total weight of the granular compaction material.

8. The material according to any of the preceding claims, **characterized in that** it further comprises: polypropylene and/or polyethylene and/or other polyolefinic materials.

9. The material according to any of the preceding claims, **characterized in that** it further comprises: - a diluting oil, preferably a paraffin oil;
- additives, such as compatibility agents, lubricating agents and dispersing agents, antioxidants, anti-UV filters and dyes.

10. The material according to claim 9, **characterized in that** the material contains said diluting oil in an amount comprised from 10 to 30% by weight with respect to the total weight of the granular compaction material.

11. The material according to any of the preceding claims, **characterized in that** it further comprises an inorganic filler; preferably calcium carbonate.

12. The material according to claim 11, **characterized in that** the material contains said inorganic filler in an amount comprised from 20 to 60% by weight with respect to the total weight of the granular compaction material.

13. A process for preparing the compaction material according to one or more claims 1 to 12, **characterized in that** it comprises at least a step in which the components are mixed so as to obtain a mixture and a step in which the mixture is extruded so as to obtain the compaction material in granular form.

14. Use of a granular compaction material comprising at least a thermoplastic elastomer for compacting a synthetic lawn.

15. Use of a granular compaction material according to claim 14, wherein said material further comprises a thermoplastic copolymer chosen among:
- Ethylene-Vinyl Acetate (EVA); and/or
- Ethylene-Butyl Acetate (EBA).

16. Use of a granular compaction material according to claim 15, wherein said elastomer is as claimed in any of the preceding claims 2-5.

17. Use of a granular compaction material according to claims 14 or 15, wherein said material is as claimed in the preceding claims 6-12.

18. A method for giving elasticity to a surface for sports activities comprising a synthetic lawn, **characterized in that** said method provides for the introduction among the fibers constituting the synthetic lawn of a granular compaction material comprising at least a thermoplastic elastomer so as to form a layer.

19. The method according to claim 18, **characterized in that** it provides for the introduction among the fibers constituting the synthetic lawn of a filling material, preferably sand, so as to form a layer before the introduction of the granular compaction material.

20. The method according to claim 18, **characterized in that** it provides for the introduction among the fibers constituting the synthetic lawn of a granular compaction material made of at least one thermoplastic elastomer and a thermoplastic copolymer chosen among:
- Ethylene-Vinyl Acetate (EVA); and/or
- Ethylene-Butyl Acetate (EBA).

21. The method according to any of the preceding claims 18-20, **characterized in that** it provides for the introduction among the fibers constituting the synthetic lawn of a granular compaction material comprising an elastomer as claimed in any of the preceding claims 2-5.

22. The method according to any of the preceding claims 18-20, **characterized in that** it provides for the introduction among the fibers constituting the synthetic lawn of a granular compaction material according to any of the preceding claims claims 6-12.

23. A synthetic lawn comprising synthetic fibers connected to a support and a layer of a granular compaction material comprising at least a thermoplastic elastomer.

24. The synthetic lawn according to claim 23, wherein said granular compaction material further comprises a thermoplastic copolymer chosen among;
- Ethylene-Vinyl Acetate (EVA); and/or
- Ethylene-Butyl Acetate (EBA).

25. The synthetic lawn according to claim 23, wherein said granular compaction material comprising a elastomer as claimed in any of the preceding claims 2-5.

26. The synthetic lawn according to claims 23-25, wherein said granular compaction material is according to any of the preceding claims 6-12.

27. The synthetic lawn according to any of the preceding claims 23-26, wherein said thermoplastic elastomer is in an amount of 5 to 30 Kg/m2.

## Patentansprüche

1. Granuläres Verdichtungsmaterial für synthetischen Rasen, umfassend mindestens ein thermoplastisches Elastomer, **dadurch gekennzeichnet, dass** das Material weiterhin ein thermoplastisches Copolymer, ausgewählt aus:
- Ethylen-Vinylacetat (EVA) und/oder
- Ethylen-Butylacetat (EBA) umfasst.

2. Material nach Anspruch 1, **dadurch gekennzeichnet, dass** das Elastomer aus Blockstyrolelastomeren ausgewählt ist.

3. Material nach Anspruch 2, **dadurch gekennzeichnet, dass** die Blockstyrolelastomere nicht hydriert sind.

4. Material nach Anspruch 2, **dadurch gekennzeichnet, dass** die Blockstyrolelastomere hydriert sind.

5. Material nach Anspruch 4, **dadurch gekennzeichnet, dass** das Elastomer ein Blockstyrolelastomer ist, ausgewählt aus der Gruppe:
- Styrol-Ethylen-Butylen-Styrol (SEBS),
- Styrol-Ethylen-Propylen-Styrol (SEPS),
- Styrol-Ethylen-Ethylen-Styrol (SEEPS).

6. Material nach einem der vorhergehenden Ansprüche, **dadurch gekennzeichnet, dass** das Material das mindestens vorhandene thermoplastische Elastomer in einer Menge von 5 bis 30 Gewichtsprozent, bezogen auf das Gesamtgewicht des granulären Verdichtungsmaterials, enthält.

7. Material nach einem der vorhergehenden Ansprüche, **dadurch gekennzeichnet, dass** das Material das thermoplastische Copolymer in einer Menge von 5 bis 40 Gewichtsprozent, bezogen auf das Gesamtgewicht des granulären Verdichtungsmaterials, enthält.

8. Material nach einem der vorhergehenden Ansprüche, **dadurch gekennzeichnet, dass** es weiterhin umfasst: Polypropylen und/oder Polyethylen und/oder andere polyolefinische Materialien.

9. Material nach einem der vorhergehenden Ansprüche, **dadurch gekennzeichnet, dass** es weiterhin umfasst:
- ein Verdünnungsöl, bevorzugt ein Paraffinöl,
- Additive, wie etwa Kompatibilitätsmittel, Gleitmittel und Dispergiermittel, Antioxidantien, anti-UV-Filter und Farbstoffe.

10. Material nach Anspruch 9, **dadurch gekennzeichnet, dass** das Material das Verdünnungsöl in einer Menge von 10 bis 30 Gewichtsprozent, bezogen auf das Gesamtgewicht des granulären Verdichtungsmaterials, enthält.

11. Material nach einem der vorhergehenden Ansprüche, **dadurch gekennzeichnet, dass** es weiterhin einen anorganischen Füllstoff, bevorzugt Calciumcarbonat, umfasst.

12. Material nach Anspruch 11, **dadurch gekennzeichnet, dass** das Material den anorganischen Füllstoff in einer Menge von 20 bis 60 Gewichtsprozent, bezogen auf das Gesamtgewicht des granulären Verdichtungsmaterials, enthält.

13. Verfahren zur Herstellung des Verdichtungsmaterials nach einem oder mehreren der Ansprüche 1 bis 12, **dadurch gekennzeichnet, dass** es mindestens einen Schritt umfasst, bei dem die Komponenten gemischt werden um ein Gemisch zu erhalten, und einen Schritt, bei dem das Gemisch extrudiert wird um das Verdichtungsmaterial in granulärer Form zu erhalten.

14. Verwendung eines granulären Verdichtungsmaterials, umfassend mindestens ein thermoplastisches Elastomer, zum Verdichten von synthetischem Rasen.

15. Verwendung eines granulären Verdichtungsmaterials nach Anspruch 14, wobei das Material weiterhin ein thermoplastisches Copolymer, ausgewählt aus:
- Ethylen-Vinylacetat (EVA) und/oder
- Ethylen-Butylacetat (EBA) umfasst.

16. Verwendung eines granulären Verdichtungsmaterials nach Anspruch 15, wobei das Elastomer derart ist, wie in einem der vorhergehenden Ansprüche 2 bis 5 beansprucht.

17. Verwendung eines granulären Verdichtungsmaterials nach einem der Ansprüche 14 oder 15, wobei das Material derart ist, wie in einem der vorhergehenden Ansprüche 6 bis 12 beansprucht.

18. Verfahren um einer Oberfläche für sportliche Betätigung, umfassend einen synthetischen Rasen, Elastizität zu vermitteln, **dadurch gekennzeichnet, dass** das Verfahren dafür sorgt, an die Fasern, welche den synthetischen Rasen bilden, ein granuläres Verdichtungsmaterial, umfassend mindestens ein thermoplastisches Elastomer, einzubringen, um eine Schicht zu bilden.

19. Verfahren nach Anspruch 18, **dadurch gekennzeichnet, dass** es dafür sorgt, an die Fasern, welche den synthetischen Rasen bilden, ein Füllmaterial, bevorzugt Sand, einzubringen, um eine Schicht zu bilden, bevor das granuläre Verdichtungsmaterial eingebracht wird.

20. Verfahren nach Anspruch 18, **dadurch gekennzeichnet, dass** es dafür sorgt, an die Fasern, welche den synthetischen Rasen bilden, ein granuläres Verdichtungsmaterial aus mindestens einem thermoplastischen Elastomer und einem thermoplastischen Copolymer, ausgewählt aus:
- Ethylen-Vinylacetat (EVA) und/oder
- Ethylen-Butylacetat (EBA) einzubringen.

21. Verfahren nach einem der Ansprüche 18 bis 20, **dadurch gekennzeichnet, dass** es dafür sorgt, an die Fasern, welche den synthetischen Rasen bilden, ein granuläres Verdichtungsmaterial, umfassend ein Elastomer, wie in einem der vorhergehenden Ansprüche 2 bis 5 beansprucht, einzubringen.

22. Verfahren nach einem der Ansprüche 18 bis 20, **dadurch gekennzeichnet, dass** es dafür sorgt, an die Fasern, welche den synthetischen Rasen bilden, ein granuläres Verdichtungsmaterial nach einem der vorhergehenden Ansprüche 6 bis 12 einzubringen.

23. Synthetischer Rasen, umfassend synthetische Fasern, die mit einem Träger verbunden sind, und eine Schicht eines granulären Verdichtungsmaterials, umfassend mindestens ein thermoplastisches Elastomer.

24. Synthetischer Rasen nach Anspruch 23, wobei das granuläre Verdichtungsmaterial weiterhin ein thermoplastisches Copolymer, ausgewählt aus:
- Ethylen-Vinylacetat (EVA) und/oder
- Ethylen-Butylacetat (EBA) umfasst.

25. Synthetischer Rasen nach Anspruch 23, wobei das granuläre Verdichtungsmaterial ein Elastomer, wie in einem der vorhergehenden Ansprüche 2 bis 5 beansprucht, umfasst.

26. Synthetischer Rasen nach einem der Ansprüche 23 bis 25, wobei das granuläre Verdichtungsmaterial gemäß einem der vorhergehenden Ansprüche 6 bis 12 ist.

27. Synthetischer Rasen nach einem der vorhergehenden Ansprüche 23 bis 26, wobei das thermoplastische Elastomer in einer Menge von 5 bis 30 kg/m² vorhanden ist.

## Revendications

1. Matériau de compactage granulaire pour pelouse synthétique comprenant au moins un élastomère thermoplastique, **caractérisé en ce que** ledit matériau comprend en outre un copolymère thermoplastique choisi parmi :
- l'Ethylène-Acétate de vinyle (EVA) ; et/ou
- l'Ethylène-Acétate de butyle (EBA).

2. Matériau selon la revendication 1, **caractérisé en ce que** ledit élastomère est choisi parmi des élastomères styrènes séquencés.

3. Matériau selon la revendication 2, **caractérisé en ce que** lesdits élastomères styrène séquencés ne sont pas hydrogénés.

4. Matériau selon la revendication 2, **caractérisé en ce que** lesdits élastomères styrène séquencés sont hydrogénés.

5. Matériau selon la revendication 4, **caractérisé en ce que** ledit élastomère est un élastomère styrène séquencé choisi parmi le groupe :
- Styrène-Éthylène-Butylène-Styrène, (SEBS) ;
- Styrène-Éthylène-Propylène-Styrène, (SEPS) ;
- Styrène-Éthylène-Éthylène-Styrène, (SEEPS).

6. Matériau selon l'une quelconque des revendications précédentes, **caractérisé en ce que** le matériau contient ledit au moins élastomère thermoplastique selon une quantité allant de 5 à 30% par poids par rapport au poids total du matériau de compactage granulaire

7. Matériau selon l'une quelconque des revendications précédentes, **caractérisé en ce que** le matériau contient ledit copolymère thermoplastique selon une quantité allant de 5 à 40% par poids par rapport au poids total du matériau de compactage granulaire

8. Matériau selon l'une quelconque des revendications précédentes, **caractérisé en ce qu'**il comprend en outre : du polypropylène et/ou du polyéthylène et/ou autres matériaux polyoléfiniques.

9. Matériau selon l'une quelconque des revendications précédentes, **caractérisé en ce qu'**il comprend en outre :
- une huile diluante, de préférence une huile de paraffine ;
- des additifs, tels que des agents de compatibilité, agents lubrifiants et agents dispersants, antioxydants, filtres anti-UV et colorants.

10. Matériau selon la revendication 9, **caractérisé en ce que** le matériau contient ladite huile diluante selon une quantité allant de 10 à 30% par poids par rapport au poids total du matériau de compactage granulaire.

11. Matériau selon l'une quelconque des revendications précédentes, **caractérisé en ce qu'**il comprend en outre une charge inorganique ; de préférence du carbonate de calcium.

12. Matériau selon la revendication 11, **caractérisé en ce que** le matériau contient ladite charge inorganique selon une quantité allant de 20 à 60% par poids par rapport au poids total du matériau de compactage granulaire.

13. Processus pour préparer le matériau de compactage selon l'une ou plusieurs des revendications 1 à 12, **caractérisé en ce qu'**il comprend au moins une étape dans laquelle les composants sont mélangés de manière à obtenir un mélange, et une étape dans laquelle le mélange est extrudé de manière à obtenir le matériau de compactage sous forme granulaire.

14. Utilisation d'un matériau de compactage granulaire comprenant au moins un élastomère thermoplastique pour compacter une pelouse synthétique.

15. Utilisation d'un matériau de compactage granulaire selon la revendication 14, dans lequel ledit matériau comprend en outre un copolymère thermoplastique choisi parmi :
- l'Ethylène-Acétate de vinyle (EVA) ; et/ou
- l'Ethylène-Acétate de butyle (EBA).

16. Utilisation d'un matériau de compactage granulaire selon la revendication 15, dans lequel ledit élastomère est selon l'une quelconque des revendications précédentes 2 à 5.

17. Utilisation d'un matériau de compactage granulaire selon les revendications 14 ou 15, dans lequel ledit matériau est selon les revendications précédentes 6 à 12.

18. Procédé pour conférer de l'élasticité à une surface pour activités sportives comprenant une pelouse synthétique, **caractérisé en ce que** ledit procédé prévoit l'introduction, parmi les fibres constituant la pelouse synthétique, d'un matériau de compactage granulaire comprenant au moins un élastomère thermoplastique de manière à former une couche.

19. Procédé selon la revendication 18, **caractérisé en ce qu'**il prévoit l'introduction, parmi les fibres constituant la pelouse synthétique, d'un matériau de remplissage, de préférence du sable, de manière à former une couche avant l'introduction du matériau de compactage granulaire.

20. Procédé selon la revendication 18, **caractérisé en ce qu'**il prévoit l'introduction, parmi les fibres constituant la pelouse synthétique, d'un matériau de compactage granulaire composé d'au moins un élastomère thermoplastique et d'un copolymère thermoplastique choisi parmi :
- l'Ethylène-Acétate de vinyle (EVA) ; et/ou
- l'Ethylène-Acétate de butyle (EBA).

21. Procédé selon l'une quelconque des revendications précédentes 18 à 20, **caractérisé en ce qu'**il prévoit l'introduction, parmi les fibres constituant la pelouse synthétique, d'un matériau de compactage granulaire comprenant un élastomère selon l'une quelconque des revendications précédentes 2 à 5.

22. Procédé selon l'une quelconque des revendications précédentes 18 à 20, **caractérisé en ce qu'**il prévoit l'introduction, parmi les fibres constituant la pelouse synthétique, d'un matériau de compactage granulaire selon l'une quelconque des revendications précédentes 6 à 12.

23. Pelouse synthétique comprenant des fibres synthétiques reliées à un support et une couche d'un matériau de compactage granulaire comprenant au moins un élastomère thermoplastique.

24. Pelouse synthétique selon la revendication 23, dans laquelle ledit matériau de compactage granulaire comprend en outre un copolymère thermoplastique choisi parmi :
- l'Ethylène-Acétate de vinyle (EVA) ; et/ou
- l'Ethylène-Acétate de butyle (EBA).

25. Pelouse synthétique selon la revendication 23, dans laquelle ledit matériau de compactage granulaire comprend un élastomère selon l'une quelconque des revendications précédentes 2 à 5.

26. Pelouse synthétique selon les revendications 23 à 25, dans laquelle ledit matériau de compactage granulaire est selon l'une quelconque des revendications précédentes 6 à 12.

27. Pelouse synthétique selon l'une quelconque des revendications précédentes 23 à 26, dans laquelle ledit élastomère thermoplastique est présent selon une quantité allant de 5 à 30 kg/m2.
